# EUROPEAN PATENT SPECIFICATION

(11) **EP 4 561 899 B1**
(45) Date of publication and mention of the grant of the patent: **16.09.2026**
(21) Application number: 23742251.4
(22) Date of filing: 13.07.2023
(51) Int. Cl.: B64D 1/08

(54) **AERIAL DELIVERY SYSTEM**
LUFTFRACHTSYSTEM
SYSTÈME DE LIVRAISON AÉRIENNE

(30) Priority: 26.07.2022 GB 202210928
(43) Date of publication of application: 04.06.2025
(73) Proprietor: Babcock Integrated Technology Limited, London W1U 1QX (GB)
(72) Inventor: DUTTON, Dan, London Greater London W1U 1QX (GB); THORNE, Kevin, London Greater London W1U 1QX (GB); BENNETT, Tom, London Greater London W1U 1QX (GB)
(74) Representative: Mewburn Ellis LLP
(86) International application number: PCT/EP2023/069466
(87) International publication number: WO 2024/022837

(56) References cited:
- EP-A1- 2 218 671
- WO-A1-2008/125815
- US-A- 1 107 109
- US-A- 5 816 536

## Description

### Field of the Invention

The present invention relates to an aerial delivery system for delivering a payload into an aquatic environment from an aircraft whilst providing adequate protection to the payload and particularly, although not exclusively, to a deceleration platform for carrying large payloads and an apparatus for attaching payloads to such a deceleration platform.

### Background

It is commonly desirable to deploy a payload, particularly boats, directly into an aquatic environment from a carrier, for example from an aircraft. This is conventionally achieved by strapping or otherwise mounting the payload onto a flat platform, which is then deployed from the carrier. Often an extractor parachute is used to pull the platform from the aircraft, and then used to deploy one or more main parachutes which slow the descent of the platform until impact with water. In other cases, the platform may be 'gravity extracted', wherein the aircraft is tilted and the platform rolls out under its own weight. In such examples the one or more main parachutes may be tied to the aircraft on lines such that the main parachutes are deployed once the platform is clear of the aircraft.

A payload platform delivered in this way descends until impact with the water's surface. The water may well be rough, and the payload itself may have been deployed from a substantial height. So, the force on impact with the water may be considerable. On impact with the water's surface, the force generated by the platform hitting the water is transmitted through the platform to the payload. In order to mount a payload to the frame a rigging is used, which typically consists of a loop of rope with multiple straps which can connect to the frame. When such a rigging is used with a boat, the straps may pass over portions of the boat which are not designed to be load-bearing. This can result in damage to the payload, or displacement of the payload from the platform when the platform impacts water as the rigging may not be sufficiently secure. In rough water conditions, separation of the payload from the platform becomes more likely, and the deployed platform is less stable.

Some platforms do exist which have been designed to address these issues. For example, some platforms have been designed with a base section having a V-shaped cross-section such that on impact with water the platform is more slowly decelerated, and potential damage to the payload is reduced. An example of such a platform is shown in WO 2008/125815 A1. However, known platforms or delivery systems are limited by the size and mass of the payload which they can be used to safely deliver. For example, if a payload is larger than the platform is designed for, the platform may not be effective at reducing forces on impact with water, and the payload may be destabilised in the air or capsize the platform after deployment. All of these scenarios may lead to damage or loss of the payload.

The present invention has been devised in light of the above considerations.

### Summary of the Invention

Generally, the present invention provides a platform for delivering payloads into an aquatic environment (e.g., an ocean, a sea, a river or a lake) wherein the platform has an upper element which supports the payload and a lower element which is configured to decelerate the platform on impact with water, as well as an apparatus for securing payloads to such a platform.

In particular, according to a first aspect of the present invention, there is provided a deceleration platform for aerial delivery of payloads into water, the deceleration platform comprising an upper flexible support, which may be referred to as a cradle, for supporting a payload; a lower flexible sheet having a cross-sectional shape which is configured to displace fluid (i.e., the water into which the platform is delivered) laterally on entry of the deceleration platform to the water to decelerate the deceleration platform; and a rigid frame supporting the upper flexible support and the lower flexible sheet, with the upper flexible support being arranged above the lower flexible sheet. The lower flexible sheet may comprise one or more continuous sheets of material (e.g. of a continuous or a perforated material), or a mesh, or a net, or a membrane, which is arranged below the upper flexible support. It may be advantageous for the lower flexible sheet to comprise one or more planar sheets of material in order to provide effective displacement of fluid, as described in more detail below. For example, the lower flexible sheet may have a generally V-shaped cross section, a generally U-shaped cross section or the like, and is arranged below the upper flexible support. The term 'V-shaped' should be understood as not being limited to cross-sectional profiles having a pointed end part, but may also encompass profiles having a rounded, or other shaped, end part. In particular, the cross-sectional shape of the lower flexible sheet may be chosen to control the deceleration of the deceleration platform as the platform impacts and enters water. The upper flexible support is configured to receive and support a payload, and so may be referred to herein as a cradle (e.g. a supporting cradle), a load-bearing support, or load-bearing sheet. For example, the upper flexible support may comprise one or more contin uous sheets of material (e.g. of a continuous or a perforated material), or a mesh, a net, or a membrane and is arranged to support the payload on the deceleration platform. In some examples, the upper flexible support may be constructed from multiple pieces of webbing or webbing straps, e.g. in a crossed formation to provide a mesh or a net. As the upper support is flexible, it is able to dampen motion, absorb shocks and vibrations, and so reduce forces which may otherwise be transferred to the payload itself. As the lower flexible sheet is arranged below the upper flexible support, it is arranged to impact water before the upper flexible support. An object entering a fluid has a deceleration profile which describes the manner in which the velocity of the object alters as the object moves into the fluid. An object experiencing little or no deceleration on entry will have a very shallow (e.g., flat) deceleration profile. An object experiencing rapid or instantaneous deceleration on entry will have very steep (e.g., vertical) deceleration profile. In this application, when reference is made to a shallow deceleration profile it is meant that the profile is closer to that of an object experiencing no deceleration than it is to that of an object experiencing total deceleration. When reference is made to a steep deceleration profile it is meant that the profile is closer to that of an object experiencing total, instantaneous deceleration than it is to that of an object experiencing no deceleration. As the lower flexible sheet has a cross-sectional shape which is configured to displace fluid laterally, it is arranged to penetrate into water and more gradually decelerate the platform, giving the platform a shallow deceleration profile and so reducing forces which may be transferred to the payload. Furthermore, as the lower flexible sheet is arranged below the upper flexible support, it is generally arranged to impact water before the upper flexible support, helping to reduce the forces acting on the payload during delivery and water entry. As the lower sheet is flexible, the material of the lower sheet is also able to dampen motion, absorb shocks and vibrations, and so reduce forces which may otherwise be transferred to the payload. The rigid frame supports the upper flexible support and the lower flexible sheet, and so provides structural strength to the platform. The upper flexible support and the lower flexible sheet may be supported from the rigid frame in any suitable manner. For example, the upper flexible support and lower flexible sheet may, in some examples, be connected directly to the rigid frame, or may be indirectly supported or hung from the frame, for example using straps or other types of rigging.

By being provided with both an upper flexible support and a lower flexible sheet in this way, a deceleration platform according to the first aspect of the present invention is capable of being used to deliver larger (i.e., bigger in both size and mass) loads than conventional delivery platforms, as the loads of supporting the payload and of absorbing the impact with water and decelerating the platform are distributed to different parts of the platform, by using an upper flexible support to support the payload and a lower flexible sheet to independently decelerate the platform upon water entry.

The upper flexible support and the lower flexible sheet may be made of the same material, such as polyester (e.g. polyester webbing bands). In some examples the lower flexible sheet may be further covered with a type 1 polyvinyl chloride (PVC) coated polyester fabric. It will be understood that any suitable material may be chosen for the upper flexible support and lower flexible sheet, and may depend particularly on the strength of the material chosen (e.g. to withstand the forces associated with bearing the payload during parachute opening shocks and impact with water), as well as the material's flexibility (e.g. to help absorbs shocks and vibrations, to mould or conform with the shape of the payload). The lower flexible sheet may preferably be provided with a smooth coating in order to reduce friction and ensure smooth entry when the deceleration platform impacts the water. The upper flexible support and/or lower flexible sheet may comprise a continuous surface of material and/or a mesh or net of material, for example a mesh or net of webbing straps with or without an additional layer of material.

Optionally, the rigid frame may support the upper flexible support and the lower flexible sheet from different respective frame members. By being arranged in this way, the strength of the deceleration platform is increased, as the forces from the payload and from an impact with water are distributed to different areas of the frame. As a result, the deceleration platform is suitable for delivering larger payloads than conventional platforms. In some embodiments, the respective frame members may be vertically offset from one another. This may ensure that the upper flexible support and the lower flexible sheet are spaced apart from one another in use. That is, the respective frame members for the upper flexible support and the lower flexible sheet may be vertically offset from one another by a sufficient distance such that in use, and on entry into water, the upper flexible support and the lower flexible sheet do not contact one another, helping to ensure that the different forces which each of the sheets are responsible for bearing are delivered to the appropriate regions of the frame, such that no portion of the deceleration platform receives a larger force than it is designed to bear. For example, the respective frame members may be vertically offset by a distance which is at least 20 cm, for example 30 cm or more, such as around 40 cm.

Optionally, the upper flexible support and the lower flexible sheet may each be supported from the rigid frame by at least one respective tensioner configured to maintain the respective upper flexible support or lower flexible sheet under tension. For example, each of the upper flexible support and the lower flexible sheet may be supported from the rigid frame along opposing edges by at least one respective tensioner on each edge, or by at least one respective tensioner on one edge of the upper flexible support or lower flexible sheet. Each tensioner may be fixed (e.g., at a first end) to a respective sheet and (e.g., at a second end) to a portion of the rigid frame, and may form a substantially inelastic connection between the respective upper flexible support or lower flexible sheet and the frame. For example, the or each tensioner may comprise a ratchet strap arrangement to support a flexible sheet.

Optionally, the upper flexible support and the lower flexible sheet may each be supported from the rigid frame by at least one respective tensioner configured to control tension in the upper flexible support and/or lower flexible sheet. For example, each of the upper flexible support and the lower flexible sheet may be supported from the rigid frame along opposing edges by at least one respective tensioner on each edge, or by at least one respective tensioner on one edge of the upper flexible support or the lower flexible sheet. Each tensioner may be fixed (e.g., at a first end) to a respective upper flexible support or lower flexible sheet and (e.g., at a second end) to a portion of the rigid frame and may have an adjustable length in order to control tension in each respective upper flexible support or lower flexible sheet. For example, the or each tensioner may comprise a ratchet strap arrangement which is adjustable to change the tension in a respective upper flexible support or lower flexible sheet. The tension may thereby be adjusted to suit a particular load (e.g., in the case of the upper flexible support) or deceleration profile (e.g., in the case of the lower flexible sheet).

Optionally, the rigid frame may comprise a rectangular base section; a plurality of upstanding side members along each longitudinal edge of the base section, such that the base section and the upstanding side members form a generally U-shaped cross-sectional profile; a plurality of bracing members connected to an upper surface of the base section at, around, or near a central longitudinal axis of the base section; and a plurality of cross-members, wherein each upstanding side member is further supported by one of the plurality of cross-members which connects the upstanding side member with one of the plurality of bracing members. That is, the bracing members form a further connection point for anchoring upstanding side members to the base section via the cross-members to provide additional strength to the frame. By providing an additional, indirect, connection of the upstanding side members to the base section in this way (particularly at or near the central longitudinal axis of the base section), loads on the upstanding side members are effectively distributed across a larger portion of the base section rather than being concentrated only at a direct connection point of the upstanding side members to the base section, increasing the overall strength and rigidity of the frame, thereby allowing the deceleration platform to be used with larger payloads than conventional platforms. It will be appreciated that each upstanding side member may be directly connected to a longitudinal edge of the base section, or each upstanding side member may be connected to a longitudinal edge of the base section via a corner bracket or the like. That is, each upstanding member is not necessarily directly attached to a longitudinal edge of the base section.

Optionally, the upper flexible support may be supported from an upper end of the upstanding side members, and the lower flexible sheet may be supported from a middle portion of the upstanding side members. This may give effect to the advantages outlined above regarding different mounting points and vertical separation of the upper flexible support and lower flexible sheet. As the upstanding members may be connected to the base section of the frame as outlined above, the loads from the upper flexible support and the lower flexible sheet are distributed across the base section of the frame and not concentrated at the edges of the frame. Of course, it will be appreciated that in some embodiments the mounting points of the upper flexible support and the lower flexible sheet may be arranged in any suitable manner.

Optionally, each bracing member may be an elongate structure which is positioned perpendicularly to the longitudinal axis of the rectangular base section. By being provided in this way, the bracing member may distribute the load across a larger portion or area of the base section, and the load is not concentrated at a small point. This may increase the strength and rigidity of the frame, such that the deceleration platform is configured to be used with larger payloads than conventional platforms.

Optionally, the rigid frame may comprise a plurality of trusses, wherein pairs of adjacent upstanding side members may be connected together by one of the plurality of trusses, to provide additional strength and rigidity to the frame, such that the deceleration platform is configured to be used with larger payloads than conventional platforms. By providing a plurality of trusses in this way, the forward and aft strength of the rigid frame may be increased. For example, trusses may be arranged to extend diagonally between adjacent side upstanding side members so as to transfer the load from an upstanding side member nearest a longitudinal end of the rigid frame to an upstanding side member nearest to a centre of the rigid frame. In some examples, pairs of adjacent upstanding side members may be connected together by two trusses which form an X-shape between the adjacent upstanding side members to help prevent the upstanding side members from moving in the forward or aft directions.

Optionally, an upper end of each upstanding side member may comprise a fixing point for a parachute riser. In use, not all of these fixing points for parachute risers may be used at the same time, but by being arranged in this way the deceleration platform has a variety of ways in which a parachute may be connected (for example, to provide stability depending on the payload). Furthermore, by using the upstanding side members as a fixing point for parachute risers, the forces on the deceleration platform from the parachute may be effectively distributed across the frame and the base section, for example as a result of the connections between the upstanding side members and the base section described above.

Optionally, the lower flexible sheet may be supported by the frame so as to have a staged V-shaped cross section, such that the lower flexible sheet has two walls and an end part, said walls extending from said end part, and said walls and said end part defining the staged V-shaped cross-section, said walls each having a first portion adjacent to said end part and a second portion remote from said end part, said first portions of said walls having a first angle of divergence (θ) and, together with said end part, defining a tip section of said lower flexible sheet, and said second portions of said walls having a second angle of divergence (φ) and defining a body section of said lower flexible sheet, wherein said second angle of divergence is greater than said first angle of divergence (θ< φ).

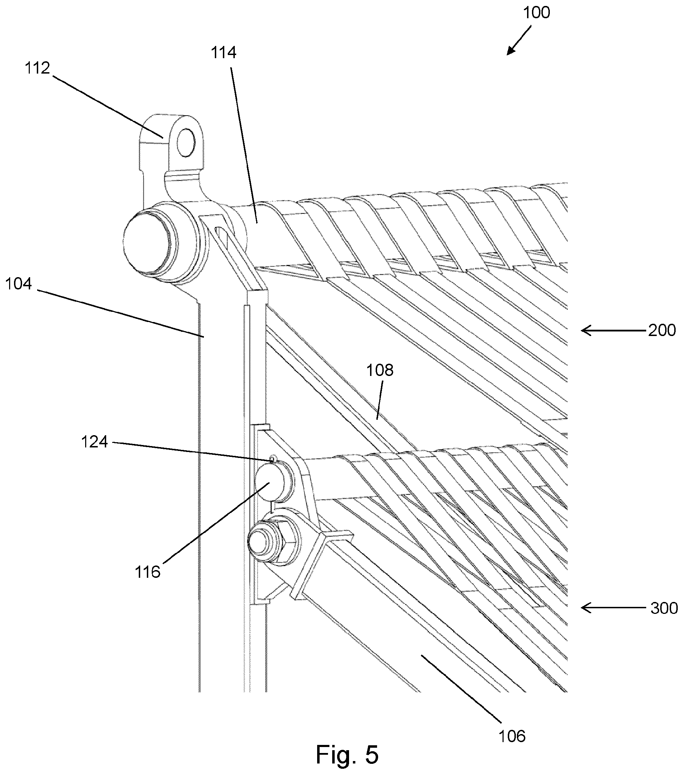

By being provided with a 'staged' (or 'staggered', or 'compound') V-shaped cross section in this way, the manner of deceleration (i.e., the deceleration profile) of the platform upon impact with water can be controlled. In particular, the staged V-shaped cross section provides at least two stages to this deceleration process. The first stage, as the tip section of the lower flexible sheet impacts the water, provides low deceleration via a shallow deceleration profile. This is due to the relatively low angle of divergence of the walls of the tip section. The end of the tip section which will impact the fluid can be pointed or rounded. The low deceleration enables the tip to extensively penetrate the fluid surface, which in turn provides a smoother landing of the platform in rough conditions. The second deceleration stage occurs when the tip has completely penetrated the fluid and the wider body section begins to enter. The wider angle of divergence of the walls of the body section provides much more deceleration via a steeper deceleration profile, to bring the load to rest. During this section of deceleration, the tip section of the platform acts substantially as a 'keel', giving the platform stability and allowing for a stable delivery of the payload in question. The angle φ is greater than the angle θ. However, the angle φ is always less than 180°, as a completely flat section would result in the platform experiencing an excessively high force when the flat body section contacts the fluid surface. These angles are shown schematically in an example form in Fig. 5. The transition of the angle of the walls from θ to φ may be immediate or gradual. Effectively, the walls of the lower flexible sheet may each be considered to have two portions, these being a first portion adjacent to the end part and a second portion remote from the end part. The first portions of the walls form the sides of the tip section of the platform and have a narrow angle of divergence. The second portions of the walls form the sides of the body section of the platform and have a wider angle of divergence than the first portions of the walls. Preferably the sides of the tip, and the sides of the body section, are of substantially constant divergence. That is, the angle θ does not vary substantially along the length of the walls of the tip section, and the angle φ does not vary substantially along the length of the walls of the body section. This means that the sides of the tip section are substantially planar, and the sides of the body section are also substantially planar.

Optionally, the rigid frame may comprise a tip support tube and tensioning struts to support the lower flexible sheet at the end part and at the junctions between the tip section and the body section. The tip support tube and tensioning struts may have a rounded cross-section such that flexible material (e.g., of the lower flexible sheet) passing over these members is less likely to be damaged by a sharp or rough edge of these members. In some embodiments, the tip support tube and tensioning struts may be removably mounted to the rigid frame, so that they may be replaced if they become damaged. For example, the tip support tube and tensioning struts may be held in place on the rigid frame by clips or locking pins or the like.

According to a second aspect of the present invention, there is provided a kit of parts, which when assembled makes the deceleration platform according to the first aspect of the present invention. Here the kit includes an upper flexible support, a lower flexible sheet, and frame members that can be connected to form a rigid frame. The upper flexible support and lower flexible support are structured to connect to the rigid frame. When connected, the rigid frame is structured to support the upper flexible support and the lower flexible sheet, with the upper flexible support being arranged above the lower flexible sheet. The lower flexible sheet being structured to have a cross-sectional shape which is configured to displace fluid laterally on entry of the deceleration platform to water to decelerate the deceleration platform.

The kit of parts may further include a rigging spreader apparatus for securing said payload, in particular a boat such as a Rigid-Hulled Inflatable Boat (RHIB) to the deceleration platform, the rigging spreader apparatus comprising an elongate beam; a support foot (or a plurality of support feet) configured to support the elongate beam relative to a payload; and a tie down eye at an end of the elongate beam for attaching rigging between the rigging spreader beam apparatus and the deceleration platform. The deceleration platform is a deceleration platform according to the first aspect of the present invention. By being provided in this way, rigging does not need to be directly attached to a part of the payload, and so the rigging spreader apparatus can be used to secure a variety of different payloads to a deceleration platform, and a payload does not need to be specifically configured to be used with a deceleration platform. The tie down eye may be described as an eyelet, an aperture, or a through-hole etc., and it will be appreciated that each end of the elongate beam may be provided with one or more such eyes to act as mounting points for attaching rigging (e.g. ratchet straps) between the rigging spreader apparatus and the deceleration platform. In use, the support foot is configured to support the elongate beam relative to a payload, and so the support foot may be positioned in a desirable location of the payload, for example to avoid weak or non-load-bearing spots of the payload. For example, the support foot may be configured to rest on the deck of a RHIB. In particular, when used to secure a boat to a deceleration platform, the rigging spreader apparatus may ensure that the load resulting from being secured to the platform is imparted to the deck of the boat through the support foot and not imparted to other areas of the boat by the rigging, as in conventional rigging arrangements, which could lead to damage.

Optionally, the spreader apparatus comprises an elongate leg connecting the support foot to the elongate beam, wherein a length of the leg is adjustable. For example, the length of the leg may be adjustable based on the depth of a boat to be secured to a deceleration platform, to ensure that rigging does not impart a load to the sides of the boat but is instead transferred to the deck via the rigging spreader apparatus. In some embodiments the support foot may be pivotably connected to the elongate leg, which may ensure that the support foot rests stably on the deck (or on a portion of another payload), even where the deck is angled, for example.

Optionally, the support foot may be removably connected to the elongate beam. In some embodiments the elongate beam may comprise a plurality of attachment points for connecting the support foot to the elongate beam such that a user may choose a suitable attachment point for a given payload (e.g. allowing adjustment of the distance between each support foot). Additionally, or alternatively, the tie down eye may be removably connected to the elongate beam. This may allow components of the rigging spreader apparatus to be easily replaced if they are damaged, for example, and/or allow the elongate beam to be replaced with a different beam (e.g. having a different length) depending on the payload and the deceleration platform which the spreader apparatus is to be used with.

Optionally, the rigging spreader apparatus may comprise a plurality of support feet, wherein the plurality of support feet may be arranged in pairs along the elongate beam, each pair of support feet being connected to the elongate beam by a pair of elongate legs arranged in an A-frame formation. This may help to ensure that the rigging spreader apparatus is balanced and well-supported with respect to the payload in use, and also ensures that the load resulting from tying the payload to the deceleration platform is distributed across the surface of the payload.

The invention includes the combination of the aspects and preferred features described except where such a combination is clearly impermissible or expressly avoided.

### Summary of the Figures

Embodiments illustrating the principles of the invention will now be discussed with reference to the accompanying figures in which:
Figure 1 shows a perspective view of a deceleration platform according to an embodiment of the invention;
Figure 2 shows a cross-sectional view of the deceleration platform of Figure 1;
Figure 3 shows a side view of a frame of the deceleration platform of Figure 1;
Figure 4 shows a bottom-up view of a frame of the deceleration platform of Figure 1;
Figure 5 shows a close view of the frame of the deceleration platform of Figure 1;
Figure 6 shows a cross-sectional view of an upper flexible support and a lower flexible sheet;
Figure 7 shows a perspective view of a rigging spreader apparatus; and
Figure 8 shows a perspective view of a boat mounted to a deceleration platform using a rigging spreader apparatus.

### Detailed Description of the Invention

Aspects and embodiments of the present invention will now be discussed with reference to the accompanying figures. Further aspects and embodiments will be apparent to those skilled in the art.

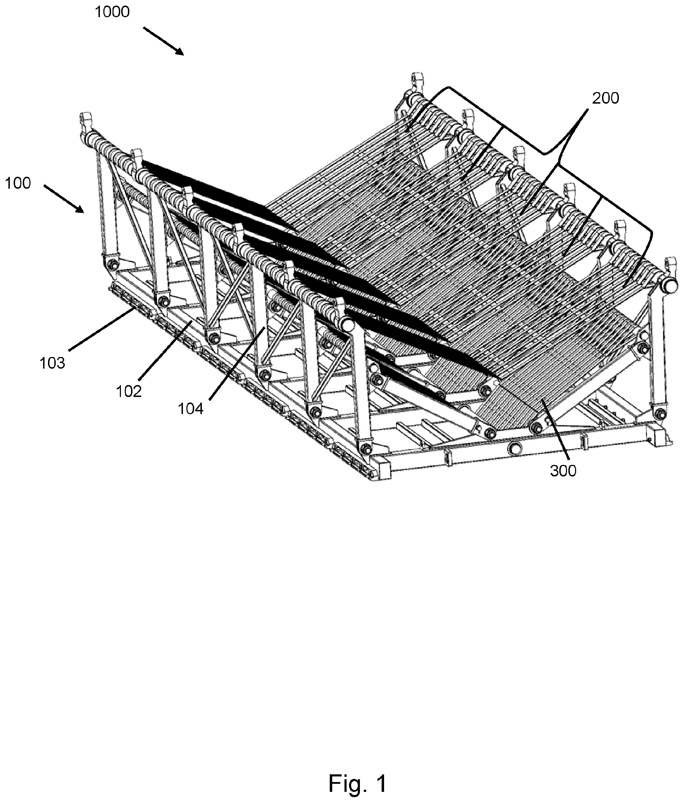

Fig. 1 shows a perspective view of a deceleration platform 1000 for aerial delivery of payloads into aquatic environments according to an embodiment of the present invention. Generally, the deceleration platform 1000 comprises a rigid frame 100 which has an upper flexible support 200 configured to receive a payload and a lower flexible sheet 300 which is configured to decelerate the platform on impact with water in order to safely deliver the payload into an aquatic environment. In particular, the lower flexible sheet 200 has a cross-sectional shape which is configured to displace fluid laterally on entry of the deceleration platform 1000 to water, as described in more detail below.

Although in some embodiments the deceleration platform 1000 may be provided with a single upper flexible support 200, and a single lower flexible sheet 200, Fig. 1 shows a frame 100 which supports a plurality of lower flexible sheets 300, such that if any damage occurs to a single sheet that sheet may be replaced easily. Each lower flexible sheet 300 may also be tensioned individually by one or more respective tensioners which support the lower flexible sheet 300 from the frame 100, which may provide improved support and deceleration for any given payload. The upper flexible support 200 in this embodiment comprises a series of nets or meshes formed of webbing straps which are suspended between the arms of the frame 100 in the form of a cradle, in a manner which is discussed in more detail below. In use, the upper flexible supports 200 generally form a support sheet or a support surface which is used to support a payload for delivery, and so the upper flexible supports 200 may also be referred to herein as a cradle, an upper flexible sheet or a load-bearing sheet. The upper flexible support 200 and the lower flexible sheets 300 are vertically separated from one another by being supported from vertically offset respective mounting points such that when a payload is in placed upon the upper flexible support 200, the payload and the upper flexible support 200 do not contact the lower flexible sheet 300, and so may be less likely to be damaged on contact with water. The lower flexible sheets 300 have a generally V-shaped cross-section, as discussed below, and so are configured to act as a shock-absorbing mechanism by modifying the deceleration profile when the platform 1000 impacts water.

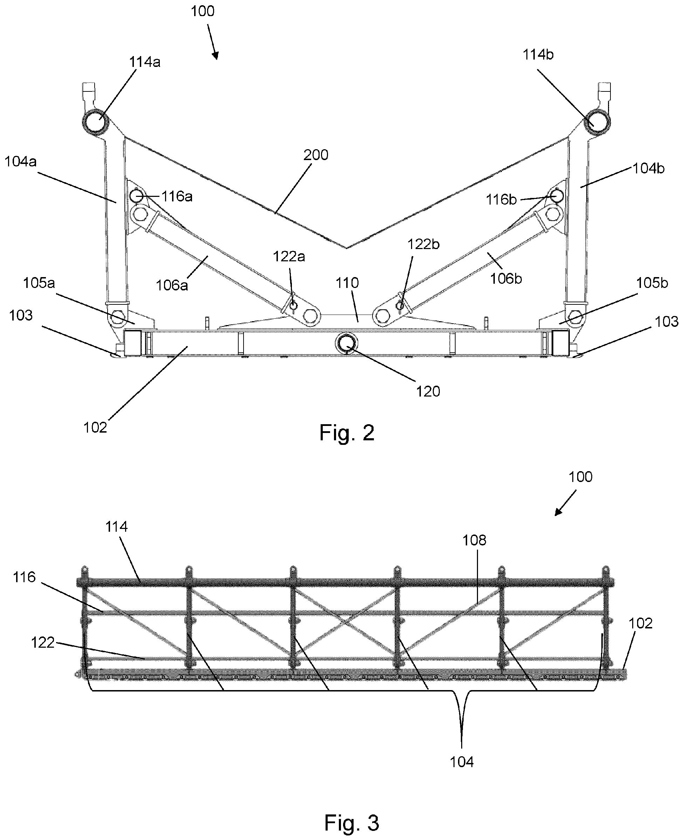

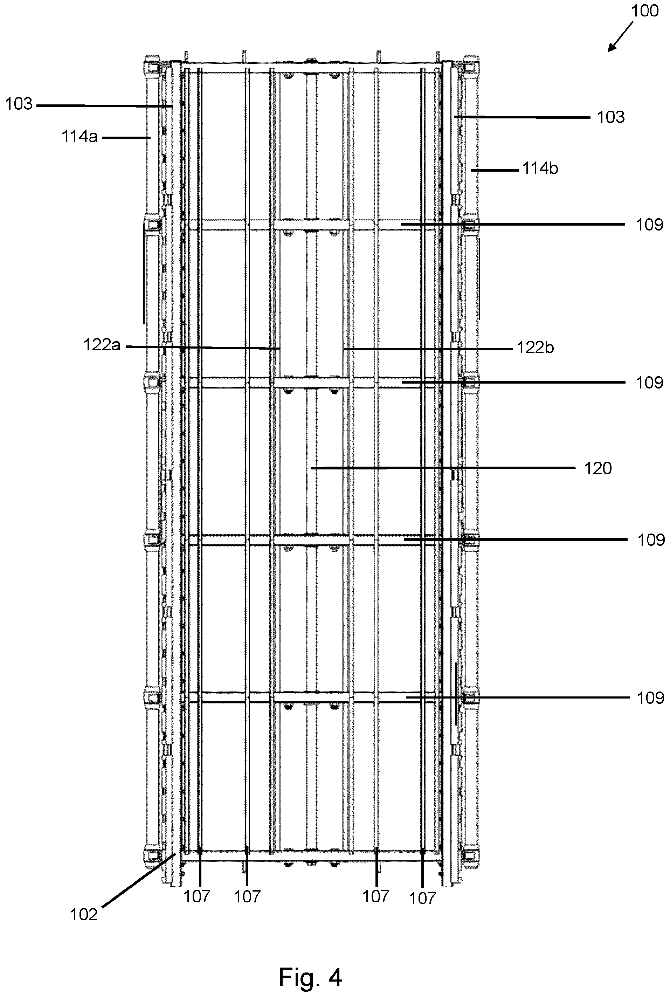

Fig. 2 shows an end view of the frame 1000 of Fig. 1; and Fig. 3 shows a side view of the frame 100 of Fig. 1 with the upper flexible support 200 and lower flexible sheet 300 removed for clarity. Fig. 4 shows a corresponding bottom view of the frame 1000.

As shown in Figs. 1-4, the rigid frame 100 is an elongate supporting structure which has a rectangular base section 102, upstanding side members 104a, 104b along each longitudinal edge of the base section 102, and cross-members 106, 106b which connect the side members 104a, 104b to the base 102 via a bracing member 110 for additional strength. Running along each side of the base 102 are castellated side rails 103 which are used to lock the rigid frame 100 into an aircraft's cargo handling system and to help keep the frame 100 straight when the platform 1000 is being loaded into the aircraft and during exit from the aircraft. The castellations in the side rails 103 allow the rigid frame 100 to be locked into position via the cargo handling system for stability during transit.

The upstanding side members 104a, 104b are connected to the base section 102 at their lower ends by respective corner brackets 105a, 105b. This arrangement gives the frame 100 a generally U-shaped cross-section as shown in Fig. 2, with the side members 104a, 104b forming the arms of the U-shape and the base section 102 forming the base of the U-shape. A payload may be received between the side members 104a, 104b and supported above the base 100 by the upper flexible supports 200 which are hung between the side members 104a, 104b. The frame 100 is made of a plurality of such side members 104a, 104b and cross-members 106a, 106b, as shown in Figs. 1 and 3, and these members are shown in more detail in Fig. 2. In particular, upstanding side members 104 may be arranged in pairs facing one another across the base section 102. Along the length of the frame, trusses 108 connect adjacent side members 104 to one another to strengthen the frame 100.

The cross-members 106a, 106b are connected to the base via a bracing portion 110. The bracing portion 110 is an elongate section which lies generally parallel to the base 102 in a direction which is perpendicular with the longitudinal axis of the frame 100, and is connected to the base 102 by a weld connection along its length. In this way, each upstanding side member 104 is further supported relative to the base section 102.

By being connected to an elongate bracing portion 110 in this way (i.e. rather than connecting directly to the base section 102 through a cross-member 106), point loads acting on the base 102 through the cross-members 106a, 106b are reduced during parachute opening shock events by dissipating and distributing the load across a larger portion of the base section 102. Furthermore, the bracing portion 110 has a low profile in order to allow boats with larger hulls to sit lower in the frame 100, ensuring stability of the deceleration platform 1000 and payload in use.

Although not shown, it will be appreciated that the frame 100 may also include a number of additional connection points, for example for connecting the deceleration platform 1000 to an extractor parachute and/or to a frame towing attachment. Such connection points may preferably be formed on the base section 102. As shown in Fig. 4, the base section 102 also comprises a plurality of longitudinal strengthening members 107 and lateral strengthening members 109 which run parallel to and perpendicular to, respectively, the longitudinal axis of the base section 102 to ensure rigidity of the structure.

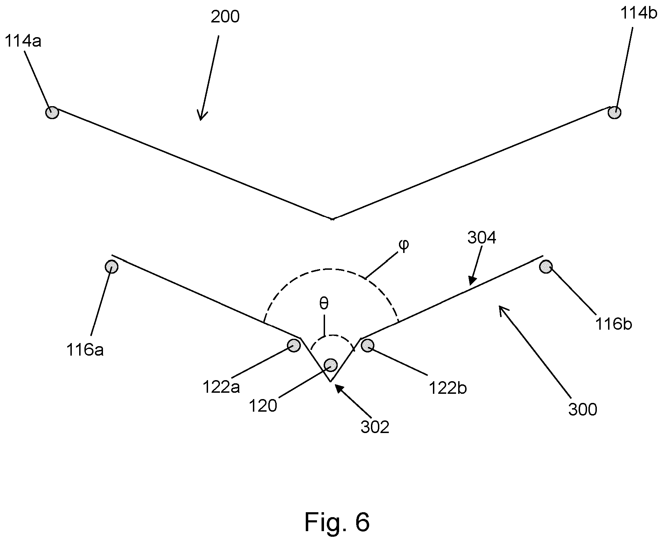

As explained in more detail below with respect to Fig. 6, the upper flexible support 200 and lower flexible sheet 300 are supported relative to the frame 100 by a number of tubes or tubular members which form respective fixing members for the upper flexible support 200 and lower flexible sheet 300. The upper flexible support is supported at its lateral outer edges by being attached to or hung from rigging tie down tubes 114a, 114b, and the lower flexible sheet 300 is similarly supported at its laterally outer edges by being attached to or hung from lower sheet support tubes 116a, 116b. These fixing members run parallel with the longitudinal axis of the base section 102. For example, the upper flexible support 200 and lower flexible sheet 300 may be supported from these tubes by ratchet straps or other tie-down arrangements, allowing tension within the upper flexible support 200 and lower flexible sheet 300 to be adjusted (e.g. taughtened or slackened) as required to suit a particular payload and to provide a desired deceleration profile. The lower flexible sheet 300 preferably has a 'staged' or 'compound' V-shaped cross-section when it is mounted on the frame 100, as shown in Fig. 5, and this is provided by way of members on the frame 100. In particular, the lower flexible sheet 300 passes underneath a tip support tube 120 and above two tensioning struts 122a, 122b to achieve the desired staged V-shaped cross section. The lower sheet support tubes 116a, 116b, tip support tube 120 and tensioning struts 122a, 122b are designed to be removable from the frame 100. In this way, the tubes can be replaced if they become damaged in use. These tubes are more likely to be damaged in use than other parts of the frame, due to the forces associated with water impact when a payload is delivered into an aquatic environment. Therefore, by making these tubes replaceable, the rest of the frame (e.g. the upstanding side members 104a, 104b, cross-members 106a, 106b, and base portion 102) can remain in service for longer. Each of the tubes or tubular members preferably has a circular cross-section to avoid catching or snagging of the upper flexible support 200 or lower flexible sheet 300 which could damage the material they are manufactured from.

Fig. 5 shows a perspective view of side portion of the frame 100. In particular, Fig. 4 shows a number of upstanding side members 104, cross-members 106 and trusses108 (which connect adjacent side members to one another). In this figure, it can be clearly seen that an upper end of each upstanding side member 104 comprises a parachute riser attachment point 112, and through the upstanding side members 104 runs a single elongate tube, the tie down tube 114, which provides a fixing point for the upper flexible support 200 and for a spreader beam (discussed below). As multiple components are mounted or fixed to or via the upstanding side members 104, such that large forces may be applied to this part in use, the upstanding side members 104 may preferably be formed by machining from a single piece of metal. Such construction may reduce the number of parts required to make the frame 100, increase the strength of the side members 104and save costs due to avoiding complex casting or welding of a complex assembly.

Fig. 5 also shows the fixing member of the lower flexible sheet 300 to the frame 100. This fixing member is another elongate tube, the lower sheet support tube 116, which passes through each of the side members 104 and runs along the length of the frame 100, as shown in Fig. 3. It will be noted that the lower sheet support tube 116 is separated vertically from the upper sheet support tube 114. As well as distributing the different loads from the upper flexible support 200 and the lower flexible sheet 300 to different parts of the frame 100, by vertically separating the mounting points in this way the frame 100 is configured to safely deliver larger payloads, particularly boats with deeper hulls, as the payload is able to sit lower down between the side members 104 and within the frame 100 without restriction from the lower flexible sheet 300 and without interfering with the operation of the lower flexible sheet 300. The lower sheet support tube 116 is not permanently fixed to the side members 104, and is removeable from the frame 100 in order to be replaceable if any damaged occurs. To hold the mounting point in place, proximate to each end of the tube 116 there is an aperture perpendicular to the longitudinal axis, such that each aperture can receive a locking pin. The locking pin is longer than the diameter of the mounting point, so the tube is held in place relative to the side members 104. A similar locking mechanism may be used with the tip support tube 120 and tensioning struts 122a, 122b discussed above.

It will be appreciated from Fig. 5 that the upper flexible support 200 comprises a number of webbing straps which are hung from the tie down tube 114. The webbing straps may also include a number of straps which run longitudinally relative to the frame 100 so as to form a mesh or net which is able to support a payload in use. Fig. 5 also shows the lower flexible sheet 300 being hung from the lower sheet support tube 116 by a number of webbing straps.

Fig. 6 is a schematic diagram showing the upper flexible support 200, lower flexible sheet 300, and associated attachment and fixing members of these sheets on a frame, such as the frame 100 described above. The attachment and support points are given corresponding reference numbers as in Figs. 1-5 described above.

The upper flexible support 200 is connected to the frame at the rigging tie down tubes 114a, 114b, which are also used to tie down the payload as described below. The upper flexible support 200 is tensioned by the connection to the tie down tubes 114a, 114b, and any form of tensional attachment may be suitable, such as a ratchet strap. Tension in the upper flexible support 200 is important for providing suitable support to a payload placed onto it, and adjusting the tension in the upper flexible support 200 may also adjust the position on the payload relative to the frame. Although the upper flexible support 200 is shown with a generally V-shaped cross-section in Fig. 4, it will be appreciated that this is only a schematic representation, and the upper flexible support 200 may be made of any suitable flexible material which is able to support a payload as required.

The upper flexible support 200 is configured to support a payload in use. For example, a payload may be a boat, such as a Rigid-Hulled Inflatable Boat (RHIB). In use, the hull of such a boat is supported by the outer edges of the upper flexible support 200, with the keel of the boat being accommodated towards the centre of the upper flexible support 200 - the upper flexible support 200 may therefore preferably be configured to take a V-shaped cross-sectional shape as shown in Fig. 5. By being supported by the upper flexible support 200, and not the lower flexible sheet 300, the payload is protected from receiving a direct force on impact of the deceleration platform with water. Much of the force of impact is transferred to the frame via the lower flexible sheet 300, and the upper flexible support 200 may absorb or dissipate forces transferred thereto without damage to the payload.

The lower flexible sheet 300 also has tensioned connection to the frame, at the lower sheet support tubes 116a, 116b. The tension in the lower flexible sheet 300 may thereby be similarly adjusted in order to withstand the forces associated with delivery into an aquatic environment. The lower flexible sheet 300 passes over tensioning struts 122a, 122b to each side of the middle of the frame, before running under a tip support tube 120 at the base of the frame. The arrangement thus provides a narrow-angled tip section 302 (indicated by an angle θ) which widens to a broader-angled body section 304 of the lower flexible sheet 300 (indicated by a larger angle φ). The narrow tip section 302 provides lower deceleration when the platform is dropped into a fluid, and is arranged to be the first part of the lower flexible sheet 300 which contacts water, and the broader body section 304 provides a high deceleration, contacting the water after the narrow tip section 302.

In particular, the lower flexible sheet 300 is provided with such a 'staged' V-shaped cross-section in order to provide a desirable deceleration profile as the deceleration platform 1000 impacts water. The staged V-shaped cross section provides at least two stages to this deceleration process. The first stage, as the tip section 302 of the lower flexible sheet 300 impacts the water, provides low deceleration via a shallow deceleration profile. This is due to the relatively low angle of divergence of the walls of the tip section. The end of the tip section 302 which will impact the fluid can be pointed or rounded. The low deceleration enables the tip to extensively penetrate the fluid surface, which in turn provides a smoother landing of the platform in rough conditions. The second deceleration stage occurs when the tip 302 has completely penetrated the fluid and the wider body section 304 begins to enter. The wider angle of divergence of the walls of the body section 304 provides much more deceleration via a steeper deceleration profile, to bring the load to rest. During this section of deceleration, the tip section 302 of the platform acts substantially as a 'keel', giving the platform 1000 stability and allowing for a stable delivery of the payload in question. It will be appreciated that the angles of the tip section 302 (θ) and of the body section 304 (φ) of the lower flexible sheet 300 may be varied to provide a desirable deceleration profile for a given payload.

As the tip support tube 120 preferably has a circular cross-section, the tip portion 302 of the lower flexible sheet is also rounded. The exact dimensions and relative angles of the narrow-angled tip section and broader-angled body section of the lower flexible sheet 300 may be selected to provide a desired deceleration profile for the payload, and this may be adjusted by appropriate positioning of the tensioning struts 122a, 122b and tensioning of the lower flexible sheet at the lower sheet support tubes 116a, 116b.

As can be appreciated from Figs. 1-6, when the deceleration platform 1000 is dropped, the base 102 of the frame 100 will make first contact with the water. However, the base 102 (and the frame 100 more generally) is constructed with tubular sections with relatively thin profiles which offer little resistance to the water, and so have limited impact on the deceleration of the platform 1000. It is therefore the lower flexible sheet 300 which is the major component of the deceleration platform 1000 responsible for absorbing and dissipating the forces of impact with the water, as described above.

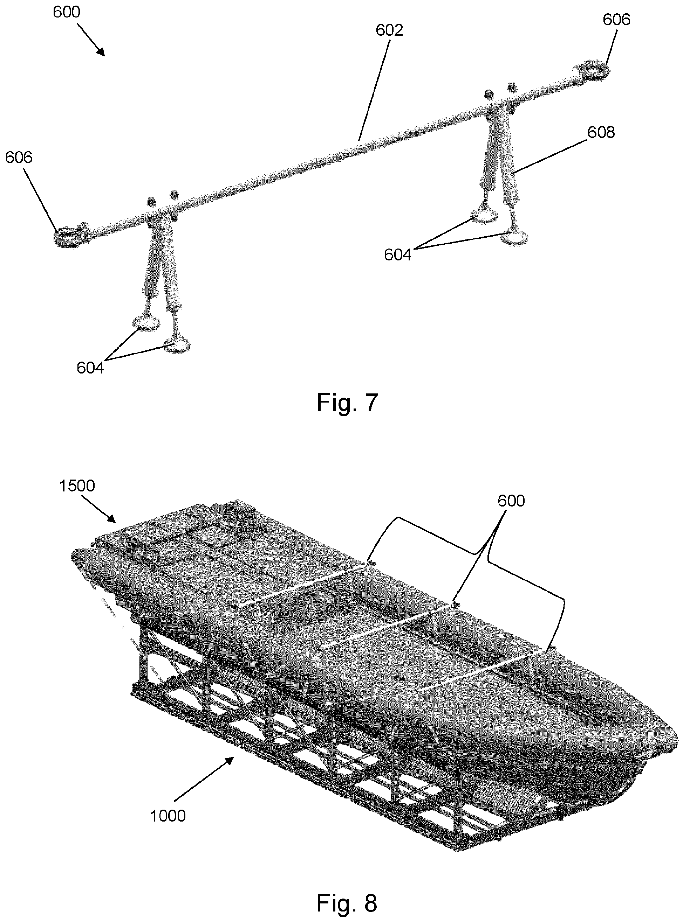

Fig. 7 shows a perspective view of a rigging spreader apparatus 600. The spreader apparatus 600 is used to secure payloads to a deceleration platform, such as the deceleration platform described above with respect to Figs. 1 to 6. The spreader apparatus 600 may be particularly advantageous where the payload to be delivered into an aquatic environment is a boat (e.g. a Rigid-Hulled Inflatable Boat, or RHIB), as the spreader apparatus 600 allows forces to be transferred to the deck of the boat, whereas known rigging methods for attaching boats to deceleration platforms involve directly fixing the boat to the deceleration platform which increases the risk of damage.

The spreader apparatus 600 comprises an elongate beam 602, support feet 604 which are configured to support the elongate beam 602 relative to a payload, and a tie down eye 606 at each end of the elongate beam 602 for attaching rigging between the spreader apparatus 600 and the deceleration platform. Each of the support feet 604 is provided at a lower end of an elongate leg 608 which connects the support foot 604 to the elongate beam 602. Each support foot 604 is pivotably connected to the respective leg 608, for example via a ball-and-socket joint, such that the support foot 604 can be rested on a surface at any angle and support the spreader apparatus 600.

As shown in Fig. 7, the spreader apparatus 600 comprises four support feet 604, which are arranged in two pairs. A first pair of feet 604 is positioned towards a first end of the elongate beam 602, and a second pair of feet 604 is positioned towards a second end of the elongate beam 602. The elongate legs 608 connecting the feet 604 to the elongate beam 602 are arranged in pairs to provide an A-frame support for each pair of feet 604, with each pair of legs 608 connected to the elongate beam 602 at an apex of the A-shape. By being provided in this way, the spreader apparatus 600 provides a stable structure to support rigging and clamp a payload to a deceleration platform. The support feet 604 are connected to a threaded bar which can be rotated within the elongate legs 608 in order to adjust the distance between the support feet 604 and the elongate beam 604 and thereby adapt the spreader apparatus 600 for different payloads and deceleration platforms. Once a desired height for the spreader apparatus 600 has been reached, the threaded bar may be held in place by tightening a nut, for example.

Fig. 7 shows that each end of the elongate beam 602 is provided with a single tie down eye 606, but it will be appreciated that different numbers of tie down eyes 606 may be utilised in different embodiments. For example, one or both ends of the elongate beam 602 may be provided with a plurality of tie down eyes 606.

In use, the feet 604 are positioned on a payload, for example on the deck of a boat, and rigging (e.g., ratchet straps) is connected between the tie down eyes 606 and a deceleration platform in order to clamp the payload to the platform. The legs 608 may be set at a suitable height. For example, where the payload is a boat, the legs 608 may be set to a height which allows the rigging to pass above the sides of the boat without imparting a load to the sides of the boat, avoiding possible damage to the sides of the boat which may not be designed to support such loads.

The legs 608 and the tie down eyes 606 may be removably connected to the elongate beam 602 (for example, the legs 608 may be removably bolted to the beam 602), allowing these components to be used with a different beam 602, for example having a different length, which may be more suitable for a particular payload. In some examples, the spreader apparatus 600 may be provided as a kit of parts, allowing a user to configure the apparatus 600 for a given payload (e.g. by selecting an appropriate elongate beam 602).

Fig. 8 shows a perspective view of a boat 1500 mounted to a deceleration platform 1000 using a rigging spreader apparatus 600, demonstrating the use of embodiments of the present invention. The dashed lines indicate rigging, which is shown passing from eyes of the respective spreader apparatus 600 to a tie down tube of the deceleration platform 1000. In this way, the boat 1500 is securely clamped onto an upper flexible support of the deceleration platform 1000 for deployments into an aquatic environment.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention, as defined by the appended claims.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A deceleration platform (1000) for aerial delivery of payloads (1500) into water, the deceleration platform (1000) comprising:
an upper flexible support (200) for supporting a payload (1500); and
a rigid frame;
**characterised in that** the deceleration platform (100) further comprises:
a lower flexible sheet (300) having a cross-sectional shape which is configured to displace fluid laterally on entry of the deceleration platform to the water to decelerate the deceleration platform; and
the rigid frame (100) supports the upper flexible support (200) and the lower flexible sheet (300), with the upper flexible support (200) being arranged above the lower flexible sheet (300).

2. A deceleration platform (1000) according to claim 1, wherein the rigid frame (100) supports the upper flexible support (200) and the lower flexible sheet (300) from different respective frame members (114, 116).

3. A deceleration platform (1000) according to claim 2, wherein the respective frame members (114, 116) are vertically offset from one another.

4. A deceleration platform (1000) according to any one of the preceding claims, wherein the upper flexible support (200) and the lower flexible sheet (300) are each supported from the rigid frame (100) by at least one respective tensioner configured to maintain the respective flexible sheet under tension.

5. A deceleration platform (1000) according to any one of the preceding claims, wherein the upper flexible support (200) and the lower flexible sheet (300) are each supported from the rigid frame (100) by at least one respective tensioner configured to control tension in the respective flexible sheet.

6. A deceleration platform (1000) according to any one of the preceding claims, wherein the rigid frame (100) comprises:
a rectangular base section (102);
a plurality of upstanding side members (104) along each longitudinal edge of the base section (102), such that the base section (102) and the upstanding side members (104) form a generally U-shaped cross-sectional profile;
a plurality of bracing members (110) connected to an upper surface of the base section at or near a central longitudinal axis of the base section (102); and
a plurality of cross-members (106), wherein each upstanding side member (104) is further supported by one of the plurality of cross-members (106) which connects the upstanding side member (104) with one of the plurality of bracing members (110).

7. A deceleration platform (1000) according to claim 6, wherein the upper flexible support (200) is supported from an upper end of the upstanding side members (104), and wherein the lower flexible sheet (300) is supported from a middle portion of the upstanding side members (104).

8. A deceleration platform (1000) according to claim 6 or claim 7, wherein each bracing member (110) is an elongate structure which is positioned perpendicularly to the longitudinal axis of the rectangular base section (102).

9. A deceleration platform (1000) according to any one of claims 6 to 8, wherein the rigid frame (100) comprises a plurality of trusses (108), wherein adjacent pairs of upstanding side members (104) are connected together by one of the plurality of trusses (108).

10. A deceleration platform (1000) according to any one of claims 6 to 9, wherein an upper end of each upstanding side member (104) comprises a fixing point for a parachute riser.

11. A deceleration platform (1000) according to any one of the preceding claims, wherein the lower flexible sheet (300) is supported by the frame (100) so as to have a staged V-shaped cross section, such that the lower flexible sheet (300) has two walls and an end part,
said walls extending from said end part, and said walls and said end part defining the staged V-shaped cross-section,
said walls each having a first portion adjacent to said end part and a second portion remote from said end part,
said first portions of said walls having a first angle of divergence and, together with said end part, defining a tip section (302) of said lower flexible sheet (300), and
said second portions of said walls having a second angle of divergence and defining a body section (304) of said lower flexible sheet (300), wherein
said second angle of divergence is greater than said first angle of divergence.

12. A deceleration platform (1000) according to claim 11, wherein the rigid frame (100) comprises a tip support tube (120) and tensioning struts (122) to support the lower flexible sheet (300) at the end part and at junctions between the tip section (302) and the body section (304).

13. A deceleration platform (1000) according to claim 12, wherein the tip support tube (120) and the tensioning struts (122) are removably mounted to the rigid frame (100).

14. A kit of parts, which when assembled makes the deceleration platform according to any one of claims 1 to 13; the kit of parts comprising:
an upper flexible support (200) for supporting a payload (1500); and
frame members that can be connected to form a rigid frame (100);
**characterised in that** the kit further comprises:
a lower flexible sheet (300); wherein
the upper flexible support (200) and lower flexible support (300) are structured to connect to the rigid frame (100) and when connected, the rigid frame (100) is structured to support the upper flexible support (200) and the lower flexible sheet (300), with the upper flexible support (200) being arranged above the lower flexible sheet (300) and such that the lower flexible sheet has a cross-sectional shape which is configured to displace fluid laterally on entry of the deceleration platform to water to decelerate the deceleration platform.

15. The kit of parts of Claim 14 further including a rigging spreader apparatus for securing said payload to said deceleration platform, the rigging spreader apparatus comprising:
an elongate beam;
a support foot configured to support the elongate beam relative to said payload; and
a tie down eye at an end of the elongate beam for attaching rigging between the rigging spreader apparatus and the deceleration platform.

## Patentansprüche

1. Bremsplattform (1000) zum Abwurf von Ladungen (1500) aus der Luft ins Wasser, wobei die Bremsplattform (1000) Folgendes umfasst:
eine obere flexible Auflage (200) zum Tragen einer Ladung (1500); und
einen starren Rahmen;
**dadurch gekennzeichnet, dass** die Bremsplattform (1000) ferner Folgendes umfasst:
eine untere flexible Lage (300), die eine Querschnittsform aufweist, die ausgelegt ist, um Fluid bei Eintauchen der Bremsplattform in das Wasser lateral zu verdrängen, um die Bremsplattform zu bremsen; und
der starre Rahmen (100) die obere flexible Auflage (200) und die untere flexible Lage (300) trägt, wobei die obere flexible Auflage (200) oberhalb der unteren flexiblen Lage (300) angeordnet ist.

2. Bremsplattform (1000) nach Anspruch 1, wobei der starre Rahmen (100) die obere flexible Auflage (200) und die untere flexible Lage (300) mit unterschiedlichen entsprechenden Rahmenelementen (114, 116) trägt.

3. Bremsplattform (1000) nach Anspruch 2, wobei die entsprechenden Rahmenelemente (114, 116) vertikal zueinander versetzt sind.

4. Bremsplattform (1000) nach einem der vorangegangenen Ansprüche, wobei die obere flexible Auflage (200) und die untere flexible Lage (300) jeweils von dem starren Rahmen (100) durch zumindest ein entsprechendes Spannelement getragen werden, das ausgelegt ist, um die entsprechende flexible Lage unter Spannung zu halten.

5. Bremsplattform (1000) nach einem der vorangegangenen Ansprüche, wobei die obere flexible Auflage (200) und die untere flexible Lage (300) jeweils von dem starren Rahmen (100) durch zumindest ein entsprechendes Spannelement getragen zu werden, das ausgelegt ist, um die Spannung in der entsprechenden flexiblen Lage zu steuern.

6. Bremsplattform (1000) nach einem der vorangegangenen Ansprüche, wobei der starre Rahmen (100) Folgendes umfasst:
einen rechteckigen Basisabschnitt (102);
eine Vielzahl von senkrecht stehenden Seitenelementen (104) entlang jeder Längskante des Basisabschnitts (102), sodass der Basisabschnitt (102) und die senkrecht stehenden Seitenelemente (104) ein im Allgemeinen U-förmiges Querschnittsprofil bilden;
eine Vielzahl von Versteifungselementen (110), die mit einer oberen Oberfläche des Basisabschnitts an oder nahe einer Mittellängsachse des Basisabschnitts (102) verbunden sind; und
eine Vielzahl von Kreuzelementen (106), wobei jedes senkrecht stehende Seitenelement (104) ferner durch eines aus der Vielzahl von Kreuzelementen (106) getragen wird, das das senkrecht stehende Seitenelement (104) mit einem aus der Vielzahl von Versteifungselementen (110) verbindet.

7. Bremsplattform (1000) nach Anspruch 6, wobei die obere flexible Auflage (200) von einem oberen Ende der senkrecht stehenden Seitenelemente (104) getragen wird, und wobei die untere flexible Lage (300) von einem Mittelabschnitt der senkrecht stehenden Seitenelemente (104) getragen wird.

8. Bremsplattform (1000) nach Anspruch 6 oder 7, wobei jedes Versteifungselement (110) eine längliche Struktur ist, die senkrecht auf die Längsachse des rechteckigen Basisabschnitts (102) angeordnet ist.

9. Bremsplattform (1000) nach einem der Ansprüche 6 bis 8, wobei der starre Rahmen (100) eine Vielzahl von Streben (108) umfasst, wobei benachbarte Paare von senkrecht stehenden Seitenelementen (104) durch einen aus der Vielzahl von Streben (108) miteinander verbunden sind.

10. Bremsplattform (1000) nach einem der Ansprüche 6 bis 9, wobei ein oberes Ende jedes senkrecht stehenden Seitenelements (104) einen Befestigungspunkt für ein Fallschirm-Gurtband umfasst.

11. Bremsplattform (1000) nach einem der vorangegangenen Ansprüche, wobei die untere flexible Lage (300) durch den Rahmen (100) getragen wird, um einen gestuften V-förmigen Querschnitt aufzuweisen, sodass die untere flexible Lage (300) zwei Wände und ein Endstück aufweist,
wobei die Wände, die sich von dem Endstück wegerstrecken und die Wände und das Endstück den gestuften V-förmigen Querschnitt definieren,
wobei die Wände jeweils einen ersten Abschnitt benachbart zu dem Endstück und einen zweiten Abschnitt, abgewandt von dem Endstück, aufweisen,
wobei die ersten Abschnitte der Wände einen ersten Divergenzwinkel aufweisen und zusammen mit dem Endstück einen Spitzenabschnitt (302) der unteren flexiblen Lage (300) definieren, und
wobei die zweiten Abschnitte der Wände einen zweiten Divergenzwinkel aufweisen und einen Körperabschnitt (304) der unteren Lage (300) definieren, wobei
der zweite Divergenzwinkel größer ist als der erste Divergenzwinkel.

12. Bremsplattform (1000) nach Anspruch 11, wobei der starre Rahmen (100) ein Spitzenträgerrohr (120) und Spannstreben (122) umfasst, um die untere flexible Lage (300) an dem Endstück und an Übergängen zwischen dem Spitzenabschnitt (302) und dem Körperabschnitt (304) zu tragen.

13. Bremsplattform (1000) nach Anspruch 12, wobei das Spitzenträgerrohr (120) und die Spannstreben (122) abnehmbar an dem starren Rahmen (100) angebracht sind.

14. Set von Teilen, die, wenn sie zusammengesetzt werden, eine Bremsplattform nach einem der Ansprüche 1 bis 13 ergeben; wobei das Set von Teilen Folgendes umfasst:
eine obere flexible Auflage (200) zum Tragen einer Ladung (1500); und
Rahmenelemente, die verbunden werden können, um einen starren Rahmen (100) zu bilden;
**dadurch gekennzeichnet, dass** das Set ferner Folgendes umfasst:
eine untere flexible Lage (300), wobei
die obere flexible Auflage (200) und die untere flexible Lage (300) strukturiert sind, um mit dem starren Rahmen (100) verbunden zu werden, und wenn diese verbunden sind, der starre Rahmen (100) strukturiert ist, um die oberen flexible Auflage (200) und die untere flexible Lage (300) zu tragen, wobei die obere flexible Auflage (200) oberhalb der unteren flexiblen Lage (300) derart angeordnet ist, dass die untere flexible Lage eine Querschnittsform aufweist, die ausgelegt ist, um Fluid bei Eintauchen der Bremsplattform in Wasser lateral zu verdrängen, um die Bremsplattform zu bremsen.

15. Set von Teilen nach Anspruch 14, das ferner eine Verzurrspreizvorrichtung zum Sichern der Ladung auf der Bremsplattform umfasst, wobei die Verzurrspreizvorrichtung Folgendes umfasst:
einen Längsträger;
einen Stützfuß, der ausgelegt ist, um den Längsträger relativ zu der Ladung zu tragen; und
eine Verzurrungsöse an einem Ende des Längsträgers zum Anbringen einer Verzurrung zwischen der Verzurrspreizvorrichtung und der Bremsplattform.

## Revendications

1. Plate-forme de décélération (1000) pour la livraison aérienne de charges utiles (1500) dans de l'eau, la plate-forme de décélération (1000) comprenant :
un support flexible supérieur (200) pour supporter une charge utile (1500) ; et
un cadre rigide ;
**caractérisée en ce que** la plate-forme de décélération (1000) comprend en outre :
une feuille flexible inférieure (300) présentant une forme de section transversale qui est configurée pour déplacer du fluide latéralement lors de l'entrée de la plate-forme de décélération dans de l'eau afin de décélérer la plate-forme de décélération ; et
le cadre rigide (100) supporte le support flexible supérieur (200) et la feuille flexible inférieure (300), le support flexible supérieur (200) étant agencé au-dessus de la feuille flexible inférieure (300).

2. Plate-forme de décélération (1000) selon la revendication 1, dans laquelle le cadre rigide (100) supporte le support flexible supérieur (200) et la feuille flexible inférieure (300) à partir de différents éléments de cadre respectifs (114, 116).

3. Plate-forme de décélération (1000) selon la revendication 2, dans laquelle les éléments de cadre respectifs (114, 116) sont décalés verticalement les uns des autres.

4. Plate-forme de décélération (1000) selon l'une quelconque des revendications précédentes, dans laquelle le support flexible supérieur (200) et la feuille flexible inférieure (300) sont supportés chacun à partir du cadre rigide (100) par au moins un dispositif de mise en tension respectif configuré pour maintenir la feuille flexible respective sous tension.

5. Plate-forme de décélération (1000) selon l'une quelconque des revendications précédentes, dans laquelle le support flexible supérieur (200) et la feuille flexible inférieure (300) sont supportés chacun par rapport au cadre rigide (100) par au moins un dispositif de mise en tension respectif configuré pour commander la tension dans la feuille flexible respective.

6. Plate-forme de décélération (1000) selon l'une quelconque des revendications précédentes, dans laquelle le cadre rigide (100) comprend :
une section de base rectangulaire (102) ;
une pluralité d'éléments latéraux verticaux (104) le long de chaque bord longitudinal de la section de base (102), de telle sorte que la section de base (102) et les éléments latéraux verticaux (104) forment un profil de section transversale généralement en forme de U ;
une pluralité d'éléments de contreventement (110) connectés à une surface supérieure de la section de base au niveau ou à proximité d'un axe longitudinal central de la section de base (102) ; et
une pluralité de traverses (106), dans laquelle chaque élément latéral vertical (104) est en outre supporté par une certaine de la pluralité de traverses (106) qui connecte l'élément latéral vertical (104) à un certain de la pluralité d'éléments de contreventement (110).

7. Plate-forme de décélération (1000) selon la revendication 6, dans laquelle le support flexible supérieur (200) est supporté à partir d'une extrémité supérieure des éléments latéraux verticaux (104), et dans laquelle la feuille flexible inférieure (300) est supportée à partir d'une partie médiane des éléments latéraux verticaux (104).

8. Plate-forme de décélération (1000) selon la revendication 6 ou la revendication 7, dans laquelle chaque élément de contreventement (110) est une structure allongée qui est positionnée perpendiculairement à l'axe longitudinal de la section de base rectangulaire (102).

9. Plate-forme de décélération (1000) selon l'une quelconque des revendications 6 à 8, dans laquelle le cadre rigide (100) comprend une pluralité de fermes (108), dans laquelle des paires adjacentes d'éléments latéraux verticaux (104) sont connectées ensemble par une certaine de la pluralité de fermes (108).

10. Plate-forme de décélération (1000) selon l'une quelconque des revendications 6 à 9, dans laquelle une extrémité supérieure de chaque élément latéral vertical (104) comprend un point de fixation pour un élévateur de parachute.

11. Plate-forme de décélération (1000) selon l'une quelconque des revendications précédentes, dans laquelle la feuille flexible inférieure (300) est supportée par le cadre (100) de manière à présenter une section transversale en forme de V étagée, de sorte que la feuille flexible inférieure (300) présente deux parois et une partie d'extrémité,
lesdites parois s'étendant à partir de ladite partie d'extrémité, et lesdites parois et ladite partie d'extrémité définissant la section transversale en forme de V étagée,
lesdites parois présentant chacune une première partie adjacente à ladite partie d'extrémité et une seconde partie éloignée de ladite partie d'extrémité,
lesdites premières parties desdites parois présentant un premier angle de divergence et, conjointement avec ladite partie d'extrémité, définissant une section d'extrémité (302) de ladite feuille flexible inférieure (300), et
lesdites secondes parties desdites parois présentant un second angle de divergence et définissant une section de corps (304) de ladite feuille flexible inférieure (300), dans laquelle
ledit second angle de divergence est supérieur audit premier angle de divergence.

12. Plate-forme de décélération (1000) selon la revendication 11, dans laquelle le cadre rigide (100) comprend un tube de support de pointe (120) et des entretoises de mise en tension (122) pour supporter la feuille flexible inférieure (300) au niveau de la partie d'extrémité et au niveau des jonctions entre la section de pointe (302) et la section de corps (304).

13. Plate-forme de décélération (1000) selon la revendication 12, dans laquelle le tube de support de pointe (120) et les entretoises de mise en tension (122) sont montés de manière amovible sur le cadre rigide (100).

14. Kit de pièces, qui, une fois assemblé, constitue la plate-forme de décélération selon l'une quelconque des revendications 1 à 13 ; le kit de pièces comprenant :
un support flexible supérieur (200) pour supporter une charge utile (1500) ; et
des éléments de cadre qui peuvent être connectés pour former un cadre rigide (100) ;
**caractérisé en ce que** le kit comprend en outre :
une feuille flexible inférieure (300) ; dans lequel
le support flexible supérieur (200) et le support flexible inférieur (300) sont structurés pour se connecter au cadre rigide (100) et, lorsqu'ils sont connectés, le cadre rigide (100) est structuré pour supporter le support flexible supérieur (200) et la feuille flexible inférieure (300), le support flexible supérieur (200) étant agencé au-dessus de la feuille flexible inférieure (300) et de telle sorte que la feuille flexible inférieure présente une forme de section transversale qui est configurée pour déplacer du fluide latéralement lors de l'entrée de la plate-forme de décélération dans de l'eau afin de décélérer la plate-forme de décélération.

15. Kit de pièces selon la revendication 14, comprenant en outre un appareil d'étalement de gréement destiné à fixer ladite charge utile à ladite plate-forme de décélération, l'appareil d'étalement de gréement comprenant :
une poutre allongée ;
un pied de support configuré pour supporter la poutre allongée par rapport à ladite charge utile ; et
un œillet d'arrimage à une extrémité de la poutre allongée pour fixer le gréement entre l'appareil d'étalement de gréement et la plate-forme de décélération.
